# EUROPEAN PATENT SPECIFICATION

(11) **EP 1 386 541 B1**
(45) Date of publication and mention of the grant of the patent: **24.09.2008**
(21) Application number: 02425503.6
(22) Date of filing: 31.07.2002
(51) Int. Cl.: A23G 9/26, A23G 9/50, A23G 9/48

(54) **A dome-shaped or any other geometrically-shaped frosted mini ice cream held on a support and provided with a grasping stick facing upwards**
Auf tragfläche gehaltenes, domförmiges oder andere geformtes reif-bedecktes Minispeiseeis mit nach oben orientiertem Stiel
Mini crème glacée givrée en forme de dome ou autre posée sur une surface de sustentation et pourvue d'un bâton dirigé vers le haut

(43) Date of publication of application: 04.02.2004
(73) Proprietor: L.V.M. S.r.l., 00195 Roma (IT)
(72) Inventor: Vanni, Lorenzo, 00195 Roma (IT)
(74) Representative: Marcio', Paola

(56) References cited:
- WO-A-99/22603
- BE-A- 710 233
- CH-A- 469 442
- DE-A- 2 823 320
- GB-A- 987 951
- GB-A- 2 084 846
- GB-A- 2 299 157
- US-A- 1 882 290
- US-A- 1 952 688
- US-A- 1 965 292
- US-A- 1 990 198
- US-A- 2 948 305
- US-A- 4 209 288
- US-A- 4 507 326
- US-A- 5 494 692

## Description

The present invention concerns a frosted mini ice-cream with a dome-shaped structure, held on a support and with an upper stick for grasping.

The actual ice-cream production is not able to solve, as it is well known, a plurality of inconveniences:
- the ice-cream bonbons, of widespread use in cinemas and while walking, are housed inside packages from which they are to be taken by hand, which implies dirtying the fingers and a lack of hygiene;
- the tastes of the ice-cream, contained in a chocolate cover, can not be previously distinguished by the consumer;
- the grasping sticks of the chocolate cream ice, due to determined choices of ice-cream production, are always applied in the lower part of the structure having roughly the shape of a rounded truncated cone, by means of machines that insert said sticks when the ice-cream is in vertical position;
- the large consume ice-cream and mini ice-cream on a stick, following to particular industrial and packaging choices, are always placed in horizontal position and on one side inside their packaging.

From DE 28 23 320 A is known a frosted ice-cream provided with grasping means showing the taste of the ice-cream on them, but the ice-cream structure is not dome-shaped and does not have a plane base to stay steady on a support. Moreover, the grasping means are not projecting towards the top, but towards the bottom.

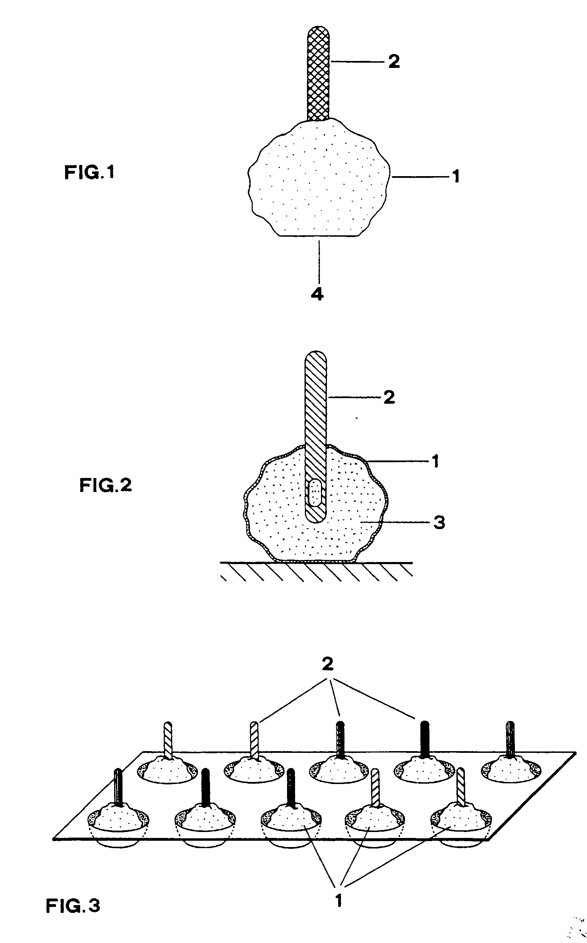

US 5 946 773 discloses a food product handle provided of coloured designs both on the surface sticking out of the product and on the hidden part. The ice-cream showed in fig. 1 is not dome-shaped, and the stick projects from the plane lower base and not from the opposite upper portion.

US 2 948 305 discloses a rigid container for not frosted ice cream, i.e. without glacé icing and not chocolate-covered. Said container wrapping the ice-cream - not the ice-cream itself - has a dome-shaped structure composed by a receptacle (12) with a supporting plane base (see fig.1) and a lid (18). The grasping means are inserted in the top of the lid and are not for supporting the ice-cream while the consumer is eating it. Actually, they enable the consumer to empty the receptacle (12) with a spoon (24). The means that allow the consumer to distinguish at first sight the taste of the ice-cream are not associated with the grasping means, but they concern the shape of the receptacle.

It is the aim of the present invention to realize a new kind of ice-cream, practical, hygienic and ready for a wide diffusion.

The aim set forth is reached by means of the mini ice-cream according to claim 1.

The advantages deriving from the present invention are many and considerable:
- said grasping means consist of sticks out of wood and/or plastic and/or other food material, with a colour varying according to the tastes of the ice-cream and/or with a writing of the taste inside;
- the final user - who may choose the taste from the colour of the stick - does not dirty his hands, in complete hygiene;
- the dome-shaped structure of the ice-cream or of any other geometric shape with a plane base allows to place the ice-cream in vertical position into the packaging and/or on a suitable tray, with the grasping stick projecting towards the top.

The present invention will be described more in detail herein below relating to the enclosed drawings, in which one embodiment is shown.
Figure 1 shows an outer axonometric view of a frosted mini ice-cream with a dome-shaped structure and/or any other geometric shape, held on a support and with an upper grasping stick.
Figure 2 shows a vertical section.
Figure 3 shows a possible packaging for a plurality of mini ice-creams with different tastes.

The figures enclosed show a frosted mini ice-cream with a dome-shaped structure, held on a support and with an upper grasping stick, consisting of:
- a frosted dome-shaped structure 1, provided with means for distinguishing at first sight the contained taste, and comprising a lower support that may project towards the top a manual grasping means for eating;
- a stick 2 for grasping and eating, inserted into said structure 1 and projecting from its upper part, in different colours corresponding each to an ice-cream 3 taste contained inside said outer frosted and undifferentiated structure 1 and/or showing the indication of the taste, so as to be distinguished at first sight by the consumer;
- a plane lower base 4 of said structure 1, so as to place the ice-cream into its package and/or on a tray, with the grasping stick 2 turned towards the top.

## Claims

1. A frosted mini ice-cream with a dome-shaped structure, held on a support and with an upper grasping stick, comprising:
- a frosted dome-shaped structure (1), provided with means for distinguishing at first sight the contained taste, and comprising a lower support that may project towards the top a manual grasping means for eating;
- a stick (2) for grasping and eating, inserted into said structure (1) and projecting from its upper part, said stick (2) showing the indication of the taste of said ice-cream and/or being of different colours corresponding each to an ice-cream (3) taste contained inside said outer frosted and undifferentiated structure (1), so as to be distinguished at first sight by the consumer, **characterized in that**:
- a plane lower base (4) is comprised in said structure (1), so as to place the ice-cream into its package and/or on a tray, with the grasping stick (2) turned towards the top.

## Patentansprüche

1. Auf Tragfläche gehaltenes domförmiges oder anders geformtes reifbedecktes Minispeiseeis, mit einem nach oben orientiertem Stiel, bestehend aus:
- einer domförmigen reifbedeckten Struktur (1), mit geschmackseindeutendem Handgriff, auf einer Tragfläche, die den Zugriff zum Verbrauch gestattet;
- einem in der obengenannten Struktur (1) eingesetzten greif- und konsumgeeigneten nach oben orientierten Stiel (2), der dem Verbraucher auf den ersten Blick durch verschiedene Farben (3) und/oder unterschiedliche Kennzeichnungen ermöglicht, das in der reifbedeckten Außenstruktur enthaltene Geschmack, zu erkennen
- einer in der Struktur (1) enthaltenen glatten unteren Tragfläche (4), die zum Liegen des Minispeiseeises in eigener Verpackung und/oder auf einem Tablett mit dem nach oben orientiertem Stiel geeignet ist.

## Revendications

1. Une mini crème glacée avec structure à former un dôme, posée sur une base et pourvue d'un bâtonnet dirigé vers le haut pour la prise, qui comprenne:
- une structure glacée (1) à former un dôme pourvue des moyens pour distinguer immédiatement le goût y compris, et qui comprenne une base inférieure qui peut projeter vers le haut un moyen de prise manuelle pour manger;
- un bâtonnet (2) pour la prise et pour manger, inséré à l'intérieur de dite structure (1) et qui projette de sa partie supérieure, dit bâtonnet (2) indiquant le goût de la crème glacée et/ou constitué en couleurs différentes pour chaque goût de dite crème (3) contenue dans la structure (1) pour être distingué immédiatement par le consommateur, **caractérisé par le fait que**:
- une base inférieure (4) est comprise dans dite structure (1) de façon à placer la crème glacée dans un enveloppe et/ou sur un plateau, avec le bâtonnet (2) pour la prise tourné vers le haut.
